# EUROPÄISCHE PATENTSCHRIFT

(11) **EP 3 316 815 B1**
(45) Veröffentlichungstag und Bekanntmachung des Hinweises auf die Patenterteilung: **06.11.2019**
(21) Anmeldenummer: 16775463.9
(22) Anmeldetag: 20.09.2016
(51) Int. Cl.: A61C 1/18, A61C 1/05, F16C 19/06, F16C 19/16, F16C 33/58

(54) **KUGELLAGERBAUFORM MIT KIPPKOMPENSATION**
BALL BEARING STRUCTURE WITH TILT COMPENSATION
MODÈLE DE ROULEMENT MUNI D'UNE COMPENSATION DE ROTATION

(30) Priorität: 22.09.2015 DE 102015012332
(43) Veröffentlichungstag der Anmeldung: 09.05.2018
(73) Patentinhaber: Gebrüder Reinfurt GmbH&Co. KG, 97222 Rimpar (DE)
(72) Erfinder: NIEDERMEIER, Herbert, 97490 Poppenhausen (DE)
(74) Vertreter: Müller-Boré & Partner Patentanwälte PartG mbB
(86) Internationale Anmeldenummer: PCT/EP2016/001572
(87) Internationale Veröffentlichungsnummer: WO 2017/050426

(56) Entgegenhaltungen:
- EP-A1- 0 010 371
- DE-A1- 2 454 079
- DE-A1-102007 005 007
- DE-A1-102007 024 253
- JP-A- H09 177 795
- JP-A- 2001 208 080
- JP-A- 2005 042 892
- US-A- 3 370 899
- US-A1- 2001 028 754
- US-B1- 6 196 720

## Beschreibung

Die vorliegende Erfindung bezieht sich auf ein Dentalhandstück zum drehenden Antreiben eines rotierenden Dentalwerkzeugs für die Zahnbehandlung sowie auf ein Kugellager für eine schwimmende Einbaulagerung und die Verwendung eines Kugellagers für die drehende Abstützung einer Turbine in einem Dentalhandstück.

Dentalhandstücke haben gasbetriebene Turbinen zum Antreiben eines Dentalwerkzeugs, wie beispielsweise eines Bohrers, für die Zahnbehandlung. Die in dem Dentalhandstück vorgesehene gasbetriebene Turbine läuft mit Drehzahlen von etwa dreihunderttausend bis fünfhunderttausend Umdrehungen pro Minute. Bei derart hohen Drehzahlen verursachen bereits minimale Unwuchten beträchtliche Vibrationen und Geräusche, die die Funktion und Haltbarkeit der Turbine verschlechtern und außerdem für den Zahnarzt und die Patienten negative Auswirkungen haben.

Deshalb müssen Geräusche und Vibrationen der Turbine gedämpft werden. US 4,249,896 schlägt eine Turbinenlagerung mit einem Paar Lagerbaugruppen vor, wobei ein Außenring des Lagers jeweils über einen einzelnen elastischen Ring, wie beispielsweise einen aus Neopren hergestellten O-Ring, gelagert ist. Der elastische Ring schafft eine radiale Abstützung der Turbine innerhalb des Gehäuses des Handstücks und dämpft eine Übertragung von Vibrationen von der Turbine auf das Handstück während der Verwendung des Handstücks.

Eine derartige Einbausituation eines Kugellagers ist sehr ungewöhnlich, weil beispielsweise Radial-Rillenkugellager und Schrägkugellager in den meisten technischen Anwendungen sehr präzise Einbaubedingungen aufweisen, bei denen die Auslegung der Lagerstellen in Fest- und Loslagerpositionen definiert sind. Die Lagerstellen sind dabei sehr genau gefertigt, so dass Verkippungen der Lagerstellen, wie beispielsweise über eine schrägstehende Welle, in den meisten Fällen ausgeschlossen werden können.

Die Außenringe des Fest- und Loslagers sind in einem Präzisionsgehäuse mit einer Toleranz von wenigen Mikrometern angeordnet und über einen Schiebe-, Übergangs- oder Festsitz im Gehäuse fixiert. In einer derartigen Einbausituation können Radial-Rillenkugellager nach dem Stand der Technik mit einem definierten Laufbahndurchmesser am Innen- und Außenring hervorragende Ergebnisse hinsichtlich Drehzahleignung, Belastbarkeit und Lebensdauer erreichen.

Bei der beschriebenen Anwendung eines Radial-Rillenkugellagers in einem Dentalhandstück gemäß US-Patent 4,249,896 ist eine derartige präzise Einbausituation nicht vorhanden, weil der Außenring über das elastische Element abgestützt ist und somit verkippen kann. In anderen Worten sind beide Lagerstellen als Loslager ausgelegt und das Rillenkugellager kann aufgrund der Verkippung sehr schnell versagen. Darüber hinaus wird der Schmierstoff, der in Form von Öl oder Fett in das Kugellager eingebracht wird, durch die Abluft der Turbine sehr schnell nach außen transportiert, so dass die Kugellager in kurzer Zeit eine Mangelschmierungssituation erfahren.

Aufgrund der unpräzisen Einbausituation kann es bereits während der Montage des Kugellagers zu einer Schrägstellung des Außenrings kommen und darüber hinaus verkippt die Rotorwelle der Turbine unter dem Einfluss einer äußeren radialen Belastung, die während der Zahnbehandlung auf das äußere Ende des Dentalwerkzeugs aufgebracht wird. Dies führt regelmäßig zu einem Verkippen des Innenrings zum Außenring des verwendeten Kugellagers, welches als Radial-Rillenkugellager oder Schrägkugellager vorliegen kann, so dass sich die Kugeln des Kugellagers im Betrieb nicht mehr auf einer Kreisbahn, sondern auf einer elliptischen Bahn bewegen. Eine Bewegung auf einer elliptischen Bahn anstelle einer Kreisbahn führt jedoch zu permanenten Geschwindigkeitsveränderungen der Kugeln, d.h. zu sehr abrupten Beschleunigungs- und Bremsvorgängen der Kugeln, die auf den Kugellagerkäfig übertragen werden, was letztlich zu größeren Vibrationen und Wechselbeanspruchungen führt, die einen hohen Verschleiß des Kugellagerkäfigs zur Folge haben, so dass diese Kugellager bereits nach kurzer Laufzeit ausfallen können.

Es wurde auch angedacht, für die schwimmende Einbaulagerung des Kugellagers ein Pendelkugellager nach DIN 630, ein Tonnenrollenlager nach DIN 635-1 oder ein Pendelrollenlager nach DIN 635-2 zu verwenden, weil diese Arten von Wälzlager gewisse Verkippungen tolerieren können. Dabei besitzt beispielsweise das Pendelkugellager zwei Kugelreihen und die Kugellaufbahn des Außenrings hat eine Hohlkugelform. Aufgrund der zweireihigen Ausführung derartiger Wälzlager haben diese Lager jedoch eine größere Dimension und eignen sich insbesondere nicht für derart hohe Drehzahlen, wie sie in einem Dentalhandstück auftreten, die im Bereich von dreihunderttausend bis fünfhunderttausend Umdrehungen liegen.

Aus der JP 2005-42892A, der US 6 196 720 B1 und der DE 24 54 079 A1 sind Kugellager bekannt, dessen Laufbahnen am Außenring, im Querschnitt gesehen, in einem zentralen Bereich eine erste Krümmung mit einem ersten Radius aufweisen und in einem sich an den zentralen Bereich anschließenden Bereich eine zweite Krümmung mit einem zweiten Radius aufweisen.

Es besteht somit ein Bedarf für ein verbessertes Dentalhandstück, das einerseits Vibrationen der Antriebsturbine gut dämpfen kann und andererseits eine hohe Lebensdauer hat sowie geringe Geräusche verursacht.

Diese Aufgabe wird durch die Merkmale der unabhängigen Ansprüche gelöst. Vorteilhafte Weiterbildungen sind in den abhängigen Ansprüchen definiert.

Gemäß einem ersten Aspekt wird ein Dentalhandstück zum drehenden Antreiben eines rotierenden Dentalwerkzeugs mit folgenden Bauteilen zur Verfügung gestellt:
einem Gehäuse, das einen Handgriff und ein Spannfutter zum Aufnehmen des Dentalwerkzeugs aufweist,
einer mittels Druckgas antreibbaren Turbine, die ein Turbinenrad und eine Rotorwelle aufweist, wobei die Rotorwelle mit dem Spannfutter verbunden ist, um das Spannfutter drehend anzutreiben,
mindestens einem Kugellager in der Form eines Radial-Rillenkugellagers oder eines Schrägkugellagers mit einer Vielzahl von Kugeln, Innenring, Außenring und Kugellagerkäfig, wobei das Kugellager die Rotorwelle drehend stützt,
wobei der Innenring des Kugellagers an der Rotorwelle angeordnet und der Außenring des Kugellagers über ein elastisches Element in dem Gehäuse gelagert ist, um Vibrationen zu dämpfen,
wobei der Außenring und der Innenring jeweils eine Laufbahn zum Führen der Kugeln aufweisen,
wobei die Laufbahn des Innenrings, im Querschnitt gesehen, eine konkave Form mit einer konstanten Krümmung aufweist, deren Radius geringfügig größer als der Radius der Kugeln ist und somit im wesentlichen dem Radius der Kugeln entspricht,
wobei die Laufbahn des Außenrings, ebenfalls im Querschnitt gesehen, in einem zentralen Bereich eine erste Krümmung mit einem ersten Radius aufweist und in zumindest einem sich an den zentralen Bereich anschließenden Bereich eine zweite Krümmung mit einem zweiten Radius aufweist und
wobei der erste Radius kleiner als der zweite Radius ist, wobei der zweite Radius um etwa 50 % bis etwa 100 % größer als der erste Radius ist.

Indem die Außenringe der Radial-Rillenkugellager bzw. Schrägkugellager, nachfolgend auch lediglich als Kugellager bezeichnet, jeweils über das elastische Element in dem Gehäuse gelagert sind, werden Vibrationen kaum auf das Handstück übertragen, so dass der Zahnarzt das Dentalhandstück auf angenehme Weise betätigen kann und es auch für den Patienten angenehm ist. Darüber hinaus werden über das elastische Element Geräusche auf ein Minimum reduziert.

Als Schrägkugellager sollen Kugellager verstanden werden, bei denen entweder der Innenring oder der Außenring mit nur einer Schulter ausgebildet sind.

Andererseits werden nachteilige Einflüsse auf das Kugellager aufgrund von Verkippungen minimiert, indem im Falle einer Verkippung die Kugeln in den Außenringen in den Bereich der zweiten Krümmung mit dem zweiten Radius laufen können. Dies führt dazu, dass die Ellipsenform der dadurch erzeugten Laufbahn der Kugeln gegenüber dem Stand der Technik verringert wird. Somit werden auftretende Beschleunigungs- und Bremskräfte, die von den Kugeln auf den Kugellagerkäfig übertragen werden, verringert. In anderen Worten verringert sich der Kontaktwinkel, wenn die Kugel in den Bereich der zweiten Krümmung mit dem zweiten Radius läuft, so dass die Ellipsenform weniger ausgeprägt ist und geringere Beschleunigungen und Abbremsungen auftreten als wenn die Kugel bei der Verkippung weiterhin auf der ersten Krümmung mit dem ersten (kleineren) Radius laufen würde. Hierdurch werden Vibrationen noch besser gedämpft und ein Verschleiß der Kugellager kann auch positiv beeinflusst werden.

Vorzugsweise liegt eine an einen Grenzpunkt zwischen der ersten Krümmung und der zweiten Krümmung an die erste Krümmung angelegte Tangente im Wesentlichen auf einer an die zweite Krümmung am Grenzpunkt angelegten Tangente. Indem die Tangenten der ersten und der zweiten Krümmung an dem Grenzpunkt zwischen den beiden Krümmungen gleiche Steigung aufweisen, kann ein glatter Übergang bzw. eine ungestörter Übergang der Kugeln von der ersten auf die zweite Krümmung sowie in der entgegengesetzten Richtung gewährleistet werden.

Indem der zweite Radius beträchtlich größer als der erste Radius ist, etwa 50% bis 100% größer, vorzugsweise etwa 70% bis 80% größer, kann im Falle einer Verkippung der Lagerstellen des Kugellagers bzw. einer relativen Verkippung zwischen Innenring und Außenring des Kugellagers der Laufweg der Kugeln im Betrieb des Kugellagers von der sich einstellenden Ellipsenbahn noch besser einer Kreisbahn angenähert bzw. die Ausprägung der Ellipsenbahn verringert werden.

Vorzugsweise ist das elastische Element ein O-Ring. Weiter bevorzugt ist der Außenring durch eine Wellfederscheibe axial vorgespannt. Durch den Einbau der Kugellager über den O-Ring als elastisches Element in Verbindung mit der Wellfederscheibe ist der Außenring jeweils sowohl in radialer als auch axialer Richtung elastisch abgestützt und kann Vibrationen sehr gut dämpfen und eine Übertragung von Vibrationen auf das Handstück so weit wie möglich vermeiden. Darüber hinaus können Verkippungen bei geeigneter Wahl der Materialien und Ausführungsformen von O-Ring und Wellfederscheibe auch reduziert werden.

Vorzugsweise erstreckt sich die erste Krümmung über einen Winkelbereich von etwa 8° bis etwa 15°.

Weiter bevorzugt sind zwei Kugellager vorgesehen, wobei beide Kugellager als Loslager eingebaut sind.

Gemäß einem weiteren Aspekt wird ein Kugellager in Form eines Radial-Rillenkugellagers oder eines Schrägkugellagers für eine schwimmende Einbaulagerung eines Außenrings, insbesondere für ein Dentalhandstück, mit folgenden Bauteilen zur Verfügung gestellt:
einem Innenring und einem Außenring sowie einer Vielzahl von dazwischen angeordneten Kugeln,
wobei der Außenring und der Innenring, jeweils eine Laufbahn zum Führen der Kugeln aufweisen,
wobei die Laufbahn des Innenrings, im Querschnitt gesehen, eine konkave Form mit einer konstanten Krümmung aufweist, deren Radius geringfügig größer ist als der Radius der Kugeln und somit im wesentlichen dem Radius der Kugeln entspricht,
wobei die Laufbahn des Außenrings, ebenfalls im Querschnitt gesehen, in einem zentralen Bereich eine erste Krümmung mit einem ersten Radius aufweist und in zumindest einem sich an den zentralen Bereich anschließenden Bereich eine zweite Krümmung mit einem zweiten Radius aufweist und
wobei der erste Radius kleiner als der zweite Radius ist, wobei der zweite Radius um etwa 50 % bis etwa 100 % größer als der erste Radius ist.

Unter einer schwimmenden Einbaulagerung des Außenrings ist eine elastische Abstützung des Außenrings in radialer und/oder axialer Richtung zu verstehen, im Gegensatz zu einer üblichen Einbausituation, bei der Lagerringe eines Wälzlagers durch einen Schiebe-, Gleit-, Übergangs- oder Presssitz eingebaut werden. In anderen Worten ist eine gewisse minimale Bewegung des Außenrings im eingebauten Zustand möglich, um Vibrationen aufgrund von Unwuchten nicht auf ein Gehäuse zu übertragen.

Die Kugeln sind vorzugsweise durch einen Kugellagerkäfig geführt. Dieser kann entweder als Innenring-geführter Kugellagerkäfig, Außenring-geführter Kugellagerkäfig oder kugelgeführter Kugellagerkäfig ausgeführt sein. Jedoch ist die Erfindung auch auf vollkugelige Kugellager ohne Kugellagerkäfig anwendbar.

Der zweite Radius ist um etwa 50% bis etwa 100% größer als der erste Radius.

Mit Vorteil erstreckt sich die erste Krümmung über einen Winkelbereich von etwa 8° bis etwa 15°.

Gemäß einem weiteren Aspekt bezieht sich die Erfindung auf eine Verwendung eines Kugellagers in der Form eines Radial-Rillenkugellagers oder eines Schrägkugellagers als Lager für die drehende Abstützung einer Turbine in einem Dentalhandstück mit einem Innenring, dessen Laufbahn, im Querschnitt gesehen, eine erste Krümmung mit einem Radius aufweist, und einem Außenring, dessen Laufbahn, ebenfalls im Querschnitt gesehen, in einem zentralen Bereich die erste Krümmung mit dem Radius aufweist und in zumindest einem sich an den zentralen Bereich anschließenden Bereich eine zweite Krümmung mit einem zweiten Radius aufweist, wobei der erste Radius kleiner ist als der zweite Radius, wobei der zweite Radius um etwa 50 % bis etwa 100 % größer als der erste Radius ist.

Die Erfindung wird nun anhand eines Ausführungsbeispiels unter Bezugnahme auf die beigefügten Zeichnungen näher erläutert.
Fig. 1 zeigt einen Querschnitt durch ein Dentalhandstück mit einem darin eingesetzten Dentalwerkzeug.
Fig. 2a bis 2c zeigen Querschnitte durch Kugellager nach dem Stand der Technik im unverkippten Zustand, wobei Fig. 2a ein Radial-Rillenkugellager darstellt, während
Fig. 2b ein Schrägkugellager darstellt, bei dem der Innenring mit nur einer Schulter ausgebildet ist, und Fig. 2c ein weiteres Schrägkugellager darstellt, bei dem der Außenring mit nur einer Schulter ausgebildet ist.
Fig. 3 zeigt einen Querschnitt durch ein Kugellager nach dem Stand der Technik bei einer Verkippung des Innenrings.
Fig. 4 zeigt einen Querschnitt durch ein Kugellager gemäß der Erfindung bei einer Verkippung des Innenrings.
Fig. 5 zeigt einen Querschnitt durch den erfindungsgemäßen Außenring eines in das Dentalstück von Fig. 1 eingebauten Kugellagers.

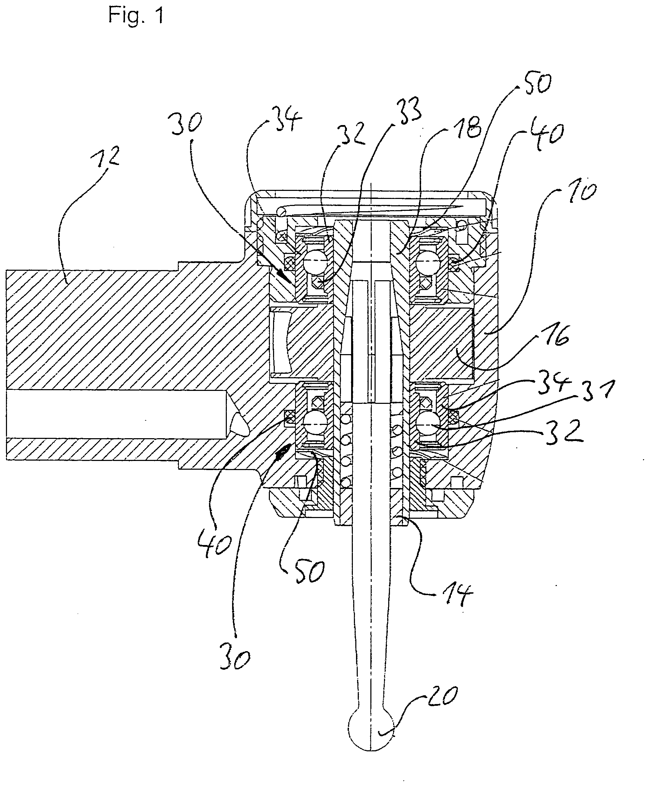

Wie in **Figur 1** gezeigt ist, weist ein Dentalhandstück einen Handgriff 12 sowie an einem distalen Ende des Handgriffs 12 ein Gehäuse 10 für die Aufnahme eines Spannfutters 14 sowie eines Turbinenrads 16 auf. Eine Rotorwelle 18 ist sowohl mit dem Turbinenrad 16 als auch mit dem Spannfutter 14 verbunden, so dass eine Drehung des Turbinenrads 16 über die Rotorwelle 18 auf das Spannfutter 14 übertragen wird. In anderen Worten, drehen sich das Turbinenrad 16, die Rotorwelle 18 und das Spannfutter 14 gemeinsam.

In das Spannfutter 14 ist ein Dentalwerkzeug 20, beispielsweise ein Bohrer, einsetzbar, so dass sich das Dentalwerkzeug 20 gemeinsam mit dem Spannfutter 14 drehen kann, wenn das Turbinenrad 16 durch Druckgas, wie beispielsweise Druckluft, in Drehung versetzt wird.

Die Rotorwelle 18 ist in dem Gehäuse 10 des Dentalhandstücks über zwei Kugellager 30 drehend gestützt. Jedes der Kugellager 30 weist eine Vielzahl von Kugeln 31 auf, die mittels eines Kugellagerkäfigs 33 geführt sind. Die Rotorwelle 18 ist in die Innenringe 32 der Kugellager 30 eingesetzt, beispielsweise über eine Presspassung oder über einen Schiebesitz und gleichzeitiger Verklebung der Innenringe 32 auf der Rotorwelle 18. Im Gegensatz hierzu sind die Außenringe 34 der Kugellager 30 elastisch in dem Gehäuse 10 abgestützt, indem elastische Elemente 40, wie beispielsweise O-Ringe, in entsprechenden Ausnehmungen des Gehäuses 10 angeordnet sind.

Auf diese Weise sind die Außenringe 34 nicht starr in dem Gehäuse 10 fixiert, sondern können sich in einem gewissen Ausmaß in dem Gehäuse 10 bewegen und somit auch verkippen. Darüber hinaus sind die Außenringe 34 jeweils über eine Wellfederscheibe 50 axial federnd vorgespannt und können aufgrund der Elastizität der Wellfederscheibe 50 auch axiale Bewegungen ausgleichen oder ausführen, was die Verkippung der Außenringe 34 verstärken kann. Aufgrund der Einbausituation der Rotorwelle 18 in die Innenringe 32 können auch diese verkippen.

Somit ist die gesamte rotierende Baugruppe bestehend aus den beiden Kugellagern 30, der Rotorwelle 18, des Turbinenrads 16 sowie dem Spannfutter 14 auf elastische Weise über das elastische Element 40 sowie die Wellfederscheibe 50 in dem Gehäuse 10 gelagert. Diese elastische Lagerung der rotierenden Baugruppe kann Vibrationen auf hervorragende Weise dämpfen, so dass sowohl beim Zahnarzt als auch beim Patienten Beeinträchtigungen aufgrund von Vibrationen auf ein Minimum reduziert werden können.

Obwohl in Fig. 1 die Lagerung der Außenringe 34 über die zwei elastischen Elemente 40 in Verbindung mit den zwei Wellfederscheiben 50 gezeigt ist, können auch zwei elastische Elemente 40 an den Außenringen 34 in Verbindung mit nur einer Wellfederscheibe 50 angeordnet werden. Alternativ können auch nur die zwei elastischen Elemente 40 angeordnet werden und auf die Wellfederscheiben 50 verzichtet werden. Bei Verzicht auf eine oder beide Wellfederscheiben dient bzw. dienen das bzw. die elastische/n Element/e 40 gleichzeitig als radiales Dämpfungselement und axiales Vorspannglied, indem das bzw. die elastische/n Element/e 40 so angeordnet werden, dass sie auch axiale Kräfte aufnehmen können. In diesem Fall ist bzw. sind der bzw. die Außenring/e 34 am Außendurchmesser mit einer Aussparung in Form einer Stufe versehen.

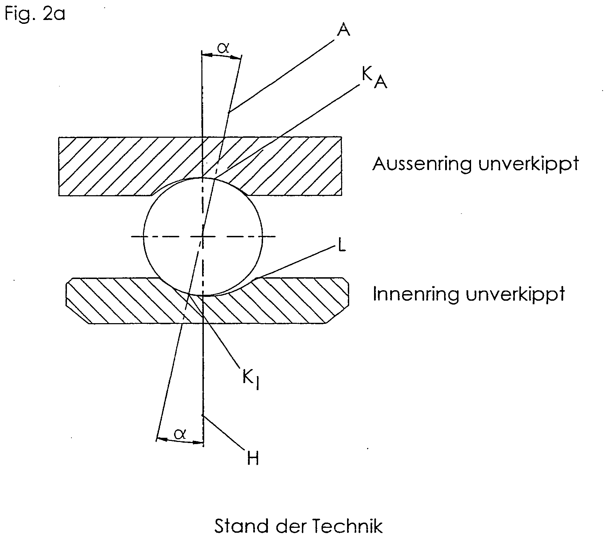

**Fig. 2a** zeigt den Querschnitt durch einen Abschnitt eines Kugellagers in Form eines Radial-Rillenkugellagers mit unverkipptem Innen- und Außenring. Bei Kugellagern bzw. Rillenkugellagern haben die Laufbahnen L des Innen- sowie des Außenrings, im Querschnitt gesehen, einen, über den gesamten Querschnitt der Laufbahnen L gesehen, identischen bzw. gleichförmigen Krümmungsradius, der geringfügig größer als jener der Kugel ist. Zudem weisen solche Kugellager vor deren Einbau eine sogenannte Radialluft auf, d.h. einen, im Querschnitt gesehen, geringen Abstand zwischen dem Außenumfang der Kugeln in Bezug auf die Laufflächen L des Innen- und Außenrings, um die Kugeln nicht zwischen Innen- und Außenring einzuklemmen. Nach dem Einbau der Kugellager müssen deshalb, wiederum im Querschnitt gesehen, Innen- und Außenring in horizontaler Richtung zueinander verschoben werden (das sogenannte Anstellen eines Kugellagers), um den Kugeln ein Anliegen an den Laufflächen L des Innen- und Außenrings zu ermöglichen. Die Stellen, an denen die Kugeln dann anliegen, werden als Kontaktpunkte bezeichnet.

Eine im Querschnitt gesehen vertikal verlaufende Achse H, wie sie in Fig. 2a gezeigt ist, steht vor dem Anstellen des Kugellagers senkrecht zur nicht dargestellten Drehachse des Kugellagers und verläuft durch den Kugelmittelpunkt sowie die, im Querschnitt gesehen, untersten bzw. tiefsten Stellen der Laufbahnen L des Innen- und Außenrings.

Durch das erforderliche Anstellen des Kugellagers und die damit verbundene gegenseitige, im Querschnitt gesehen, horizontale Verschiebung des Außenrings zum Innenring verschieben sich die ursprünglich, d.h. vor dem Einbau des Kugellagers, im tiefsten Punkt der Laufbahnen gelegenen, theoretischen Kontaktpunkte der Kugel. Aufgrund dieser Verschiebung wandern somit die Kontaktpunkte zu einer Achse A, die zur Achse H um einen Winkel α versetzt ist. Die Achse H verbleibt nach dem Anstellen vertikal und durch den Kugelmittelpunkt verlaufend. In Fig. 2a sind die sich somit neu ergebenden Kontaktpunkte mit K_{A} (Kontaktpunkt am Außenring) und K_{I} (Kontaktpunkt am Innenring) bezeichnet. Mit anderen Worten ergibt sich, im dargestellten Querschnitt gesehen, ein Versatz der im tiefsten Punkt der Laufbahnen liegenden theoretischen Kontaktpunkte zu den nun auf der Achse A gelegenen Kontaktpunkten K_{A} und K_{I}, der auch als Druckwinkel α zwischen den Achsen H und A bezeichnet werden kann.

Die Kugeln des Kugellagers laufen im Betrieb auch bei dem beschriebenen Versatz, d.h. auch wenn die Kontaktpunkte K_{A} und K_{I} den Druckwinkel α zur vertikalen Achse H aufweisen, auf einer das Kugellager nicht übermäßig verschleißenden kreisförmigen Bahn, die auch Kreisbahn genannt werden kann, solange sich der Innenring und der Außenring nicht relativ bzw. gegenseitig zueinander verkippen.

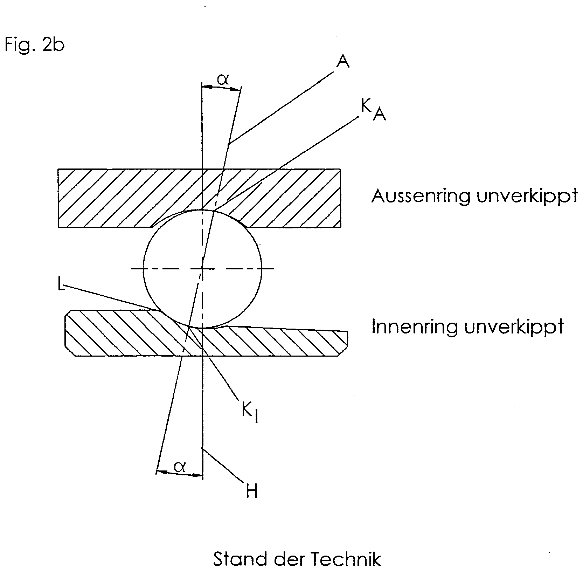

Fig. 2b zeigt analog zu Fig. 2a ein Schrägkugellager, bei dem der Außenring identisch mit dem Außenring des Radial-Rillenkugellagers von Fig. 2a ist und deshalb hier nicht näher erläutert wird. Im Unterschied zu dem in Fig. 2a gezeigten Radial-Rillenkugellager hat das Schrägkugellager von Fig. 2b jedoch einen Innenring mit nur einer Schulter, d.h. die konkave Laufbahn oder Rille ist nicht symmetrisch, sondern hat nur auf einer Seite eine Schulter, während die entgegengesetzte Seite im Wesentlichen flach, d.h. im gezeigten Schnitt im Wesentlichen horizontal oder leicht konisch verläuft.

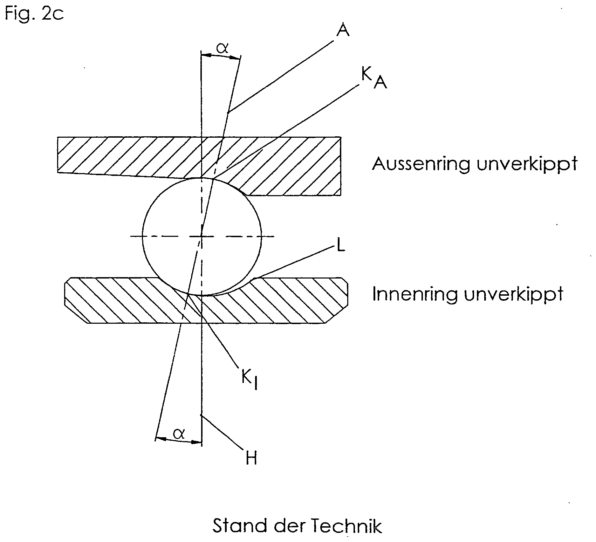

Des weiteren zeigt Fig. 2c ein Schrägkugellager mit einem symmetrischen Innenring und einem Außenring, der nur eine Schulter aufweist.

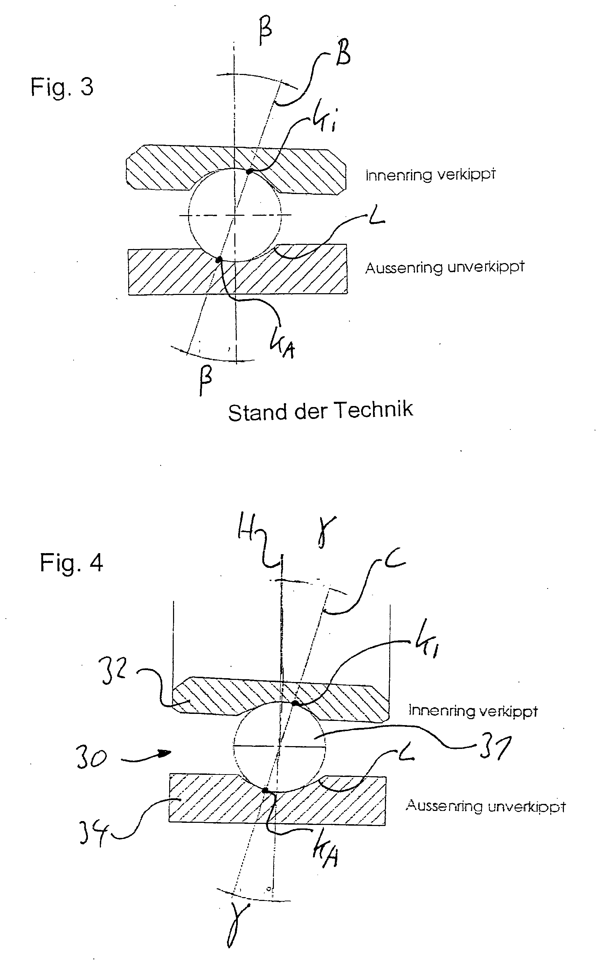

Aufgrund der elastischen Lagerung des Außenrings in dem Gehäuse 10 kann es zu einer relativen Verkippung des Außenrings gegenüber dem Innenring kommen. Dies soll anhand der folgenden Modellrechnung näher erläutert werden, wobei zunächst die Verkippung eines Kugellagers nach dem Stand der Technik untersucht wird (Fig. 3) und danach einer Verkippung eines erfindungsgemäßen Kugellagers (Fig. 4) gegenübergestellt wird.

Eine relative Verkippung zwischen Innen- und Außenring eines Kugellagers ist in **Fig. 3** gezeigt und zwar anhand einer Verkippung des Innenrings zum Außenring. Obwohl Fig. 3 die Verkippung anhand eines Radial-Rillenkugellagers zeigt, kann ein entsprechendes Schrägkugellager dieselbe Verkippung aufweisen. Die Bezeichnungen aus Fig. 2a bis 2c werden übernommen, da sich ansonsten der dargestellte Querschnitt nicht von dem Querschnitt aus Fig. 2a bis 2c unterscheidet. Eine solche relative Verkippung hat aber eine das Kugellager im Betrieb übermäßig verschleißende elliptische Laufbahn der Kugeln, die auch Ellipsenbahn genannt werden kann, zur Folge und zwar unabhängig davon, welcher Druckwinkel vorliegt. Die Kugeln laufen im Betrieb demnach nicht mehr auf der Kreisbahn, sondern auf einer elliptischen Bahn, die entsprechende ungewollte Beschleunigungen und Abbremsungen der Kugeln im Betrieb des Kugellagers verursachen.

Durch die Verkippung verlagern sich zusätzlich die Kontaktpunkte K_{I} und K_{A} hin zu einem Winkel β, der, von der Achse H aus gesehen, größer ist als der Druckwinkel α. Der Winkel β ist am Innenring und am Außenring in etwa gleich groß. Dieser größere Winkel β soll nachfolgend als Kontaktwinkel bezeichnet werden.

Je größer der Kontaktwinkel β in Bezug auf die vertikale Achse H wird, um so mehr verändert sich zudem die Form der Ellipsenbahn, da bei größer werdendem Kontaktwinkel, in Fig. 3 mit β bezeichnet, die Brennpunkte der sich ergebenden Ellipse weiter auseinander laufen, die Ellipse mithin eine schmälere bzw. längliche Form annimmt.

Wie auch bei den Kugellagern gemäß Fig. 2a bis 2c verschieben sich bei der Ausführungsform gemäß Fig. 3 der Kontaktpunkt K_{A} am Außenring 34 und der Kontaktpunkt K_{I} am Innenring 32 weg von der Achse H hin zur einer Achse B. Bei der in Fig. 3 gezeigten Verkippung des Innenrings relativ zum Außenring ergibt sich ein Kontaktwinkel β, um welchen sich die Kontaktpunkte K_{A} am Außenring sowie K_{I} am Innenring in den Laufbahnen L von der Achse H weg bewegen, der im Regelfall aufgrund der Verkippung größer ist als der Druckwinkel α aus Fig. 2 bei zueinander unverkipptem Innen- zum Außenring. In der Folge ergibt sich bei einer Verkippung von Innenring zu Außenring nicht nur die beschriebene, Verschleiß erzeugende Ellipsenbahn, sondern zudem auch ein größerer Kontaktwinkel β der Kontaktpunkte K_{A} und K_{I}.

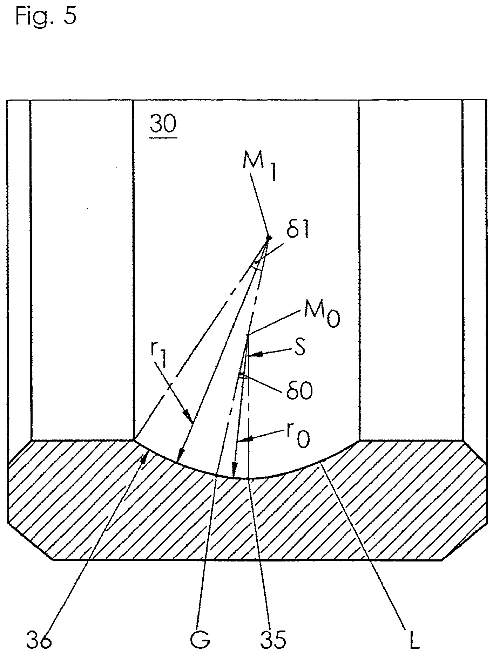

Eine relative Verkippung zwischen Innen- und Außenring eines Kugellagers, wie in Fig. 3, ist auch in **Fig. 4** gezeigt und zwar wiederum beispielhaft lediglich anhand einer Verkippung des Innenrings zum Außenring. Fig. 4 entspricht dabei der Ausführungsform gemäß Fig. 3, wobei in Fig. 4 der Außenring aber nunmehr gemäß der Erfindung (wie dies näher zu der nachfolgenden Fig. 5 erläutert wird) ausgestaltet ist. Der Innenring bleibt aber unverändert und ist somit identisch mit dem in den Fig. 2 und 3 gezeigten Innenring.

Dargestellt sind wieder die Kontaktpunkte K_{I} und K_{A}, die sich nun jedoch aufgrund der erfindungsgemäßen Veränderung der Laufbahn L des Außenrings 34 weniger weit weg von der Achse H bewegen als dies in Fig. 3 der Fall ist. Es versteht sich dabei, dass ein Vergleich zwischen den Ausführungsformen der Fig. 2 bis 4 nur dann möglich ist, wenn die dort gezeigten Kugellager identische Abmessungen aufweisen.

Aus Fig. 4 wird deutlich, dass der Kontaktwinkel in Bezug auf die Achse H, hier mit γ bezeichnet, und somit der Versatz der Kontaktpunkte K_{I}, und K_{A}, die sich nunmehr auf der Achse C befinden, beträchtlich kleiner ist als im Stand der Technik gemäß der Fig. 3. Der Winkel γ ist am Innenring und am Außenring in etwa gleich groß. Aufgrund des markant beträchtlich kleineren Kontaktwinkels γ gegenüber jenem gemäß dem Stand der Technik wird die Form der sich im Betrieb des Kugellagers im Hinblick auf das Abrollen der Kugeln 31 einstellenden Ellipse wesentlich verringert, weil sich bei kleinerem Kontaktwinkel γ der Abstand der Brennpunkte der Ellipse erheblich verringert, so dass die auftretenden Beschleunigungen und Abbremsungen der Kugeln 31 innerhalb des Kugellagers 30 beträchtlich verringert werden. Dies hat geringere Vibrationen des Kugellagers 30 zur Folge und darüber hinaus wird die Standzeit des Kugellagers 30 selbst bei Mangelschmierung beträchtlich vergrößert.

Es wurden Prüfstandsversuche durchgeführt mit einem Radial-Rillenkugellager nach dem Stand der Technik, wie es in Fig. 3 gezeigt ist, und mit einem erfindungsgemäßen Radial-Rillenkugellager, wie es in Fig. 4 gezeigt ist. Dabei wurden die Ergebnisse der vorstehend erläuterten Modellrechnung bestätigt. Es hat sich insbesondere gezeigt, dass das erfindungsgemäße Kugellager bei einer relativen Verkippung des Außenrings gegenüber dem Innenring eine beträchtlich längere Lebensdauer aufweist.

Die erfindungsgemäße Ausbildung der Laufbahn L des Außenrings 34 des Kugellagers 30 wird nun anhand von **Figur 5** näher erläutert. An dieser Stelle sei noch einmal angemerkt, dass die Laufbahn L des (nicht dargestellten) Innenrings nicht verändert wird, d.h. sie ist, im Querschnitt gesehen, wie üblich und bekannt, mit einer konstanten Krümmung bzw. einem konstanten Kreisbogen ausgebildet.

Im Gegensatz zu den bislang bekannten Ausführungsformen der Laufbahnen bei den Außenringen eines Radial-Rillenkugellagers bzw. eines Schrägkugellagers erstreckt sich bei der erfindungsgemäßen Laufbahn L des Außenrings 34 ein erster Radius bzw. Krümmungsradius r₀, der, wie üblich und bekannt, geringfügig größer als der Radius der Kugeln 31 ist, nur über einen Winkel bzw. Winkelbereich δ0 (der auch als erster Laufbahnwinkel δ0 bezeichnet werden kann), der etwa 8° bis etwa 15° beträgt, also nicht über den gesamten Querschnitt der Laufbahn L, d.h. nicht bis hin zu deren Ende, wie dies in Figur 5 dargestellt ist. Der Winkel δ0 erstreckt sich dabei, im Querschnitt gesehen, vom tiefsten Punkt der Laufbahn L bis zu einem Grenzpunkt G. Aufgrund der Symmetrie des im Querschnitt in Fig. 5 gezeigten Außenrings 34 soll nachfolgend nur die sich von der Symmetrieachse S in Fig. 5 nach links erstreckende Hälfte beschrieben werden, weil sich bei Radial-Rillenkugellagern für die von der Symmetrieachse S in Fig. 5 nach rechts erstreckende Hälfte eine identische Ausbildung ergibt. Beim Schrägkugellager erstreckt sich die Laufbahn L bekanntermaßen, im Querschnitt von der Symmetrieachse S aus gesehen, grundsätzlich nur nach einer Seite, während die Laufbahn L auf der gegenüberliegenden Seite der Symmetrieachse S kurz hinter dem tiefsten Punkt, d.h. im Querschnitt gesehen kurz hinter der Symmetrieachse endet.

Vom Grenzpunkt G an bis hin zum Ende der Laufbahn L geht der erste Krümmungsradius r₀ in einen größeren zweiten Radius bzw. Krümmungsradius r₁ über und zwar bis hin zum Ende der Laufbahn L. Der Krümmungsradius r₁ erstreckt sich über einen zweiten Winkelbereich δ1 (der als zweiter Laufbahnwinkel δ1 bezeichnet werden kann) und ist dabei etwa 50% bis etwa 100% größer als der erste Radius bzw. Krümmungsradius r₀. Vorzugsweise ist r₁ etwa 70% bis etwa 80% größer als r₀.

Eine an den ersten Krümmungsradius r₀ angelegte Tangente soll an dem Grenzpunkt G deckungsgleich sein bzw. gleiche Steigung haben wie eine an den zweiten Krümmungsradius r₁ ebenfalls am Grenzpunkt G angelegte Tangente, so dass ein glatter Übergang zwischen den beiden unterschiedlichen Radien r₀ und r₁ gegeben ist. Deshalb ist der Mittelpunkt M₁ des zweiten Krümmungsradius r₁ sowohl in vertikaler Richtung (in Fig. 5 in Richtung der Symmetrieachse S) als auch in horizontaler Richtung (in Fig. 5 in Richtung der nicht gezeigten Drehachse des Kugellagers 30) gegenüber dem Mittelpunkt M₀ des ersten Krümmungsradius r₀ versetzt, wie es in **Fig. 5** gezeigt ist.

Der in Fig. 5 nicht dargestellte Kontaktpunkt K_{A} (siehe Fig. 4) am Außenring 34 liegt bei einer gegenseitigen Verkippung von Innenring zu Außenring im Bereich des größeren zweiten Krümmungsradius r₁ bzw. im Bereich der zweiten Krümmung 36.

Aufgrund der erfindungsgemäßen Ausgestaltung des Außenrings 34 des Kugellagers 30 (einreihiges Radial-Rillenkugellager bzw. Schrägkugellager) werden bei hohen Drehzahlen, wie sie in dem Dentalhandstück auftreten, die bei einer zueinander relativen Verkippung von Innenring zu Außenring durch das Kugellager erzeugten Vibrationen verhindert, zumindest jedoch sehr stark vermindert. In der Folge kann das Kugellager 30 selbst bei Mangelschmierung eine wesentlich höhere Standzeit haben, als dies bislang möglich ist, so dass Ausfallwahrscheinlichkeiten minimiert werden. Möglicherweise noch verbleibende Vibrationen können über die schwimmende bzw. elastische Einbaulagerung mittels der elastischen Elemente 40 und den Wellfederscheiben 50 (siehe Fig. 1) gedämpft werden, um nicht auf den Handgriff 12 des Dentalhandstückes übertragen zu werden.

Durch die Ausbildung des Außenrings 34 mit der zweiten Krümmung 36, die den zweiten Radius r₁ aufweist, im Anschluss an die erste Krümmung 35, die den ersten Radius r₀ aufweist, werden die Kontaktpunkte K_{A} am Außenring 34 und K_{I} am (nicht gezeigten) Innenring weniger weit weg von der Symmetrieachse S verschoben, so dass der Abstand der Brennpunkte, der sich durch die Verkippung einstellenden Ellipse verringert werden, die gegenüber dem Stand der Technik somit eher einer Kreisbahn angenähert werden kann. Folglich treten erheblich geringere Beschleunigungen und Abbremsungen der Kugeln 31 bei Betrieb des Kugellagers 30 auf.

Es ist nochmals anzumerken, dass der nicht gezeigte Innenring eine konstante, sich, im Querschnitt gesehen, über die gesamte Länge der Laufbahn L nicht ändernde Krümmung aufweist, die im vorliegenden Fall dem ersten Krümmungsradius r₀ des Außenrings 34 entspricht, so dass eine präzise axiale Führung der Kugeln 31 gewährleistet ist. Lediglich der Außenring 34 weist, im Querschnitt gesehen, an seinem Laufbahngrund die erste Krümmung 35 mit dem kleineren ersten Radius r₀ und daran anschließend, ab dem Grenzpunkt G, eine zweite Krümmung 36 mit einem größeren zweiten Radius r₁ auf.

### Bezugszeichenliste

- 10: Gehäuse
- 12: Handgriff
- 14: Spannfutter
- 16: Turbinenrad
- 18: Rotorwelle
- 20: Dentalwerkzeug
- 30: Kugellager
- 31: Kugel
- 32: Innenring
- 33: Kugellagerkäfig
- 34: Außenring
- 35: erste Krümmung
- 36: zweite Krümmung
- 40: elastisches Element (O-Ring)
- 50: Wellfederscheibe
- A: Achse
- G: Grenzpunkt
- H: Achse
- K_{A}: Kontaktpunkt am Außenring
- K_{I}: Kontaktpunkt am Innenring
- L: Laufbahn
- r₀: erster Radius
- r₁: zweiter Radius
- α: Winkel / Druckwinkel
- β: Winkel / Kontaktwinkel
- γ: Winkel / Kontaktwinkel
- δ0: erster Winkelbereich / erster Laufbahnwinkel
- δ1: zweiter Winkelbereich / zweiter Laufbahnwinkel
- S: Symmetrieachse
- M₀: Mittelpunkt
- M₁: Mittelpunkt

## Patentansprüche

1. Dentalhandstück zum drehenden Antreiben eines rotierenden Dentalwerkzeugs (20) mit:
einem Gehäuse (10), das einen Handgriff (12) und ein Spannfutter (14) zum Aufnehmen des Dentalwerkzeugs (20) aufweist,
einer mittels Druckgas antreibbaren Turbine, die ein Turbinenrad (16) und eine Rotorwelle (18) aufweist, wobei die Rotorwelle (18) mit dem Spannfutter (14) verbunden ist, um das Spannfutter (14) drehend anzutreiben,
mindestens einem Kugellager (30) mit Kugeln (31), Innenring (32), Außenring (34) und Kugellagerkäfig (33), welches die Rotorwelle (18) drehend stützt,
wobei der Innenring (32) des Kugellagers (30) an der Rotorwelle (18) angeordnet und der Außenring (34) des Kugellagers (30) über ein elastisches Element (40) in dem Gehäuse (10) gelagert ist, um Vibrationen zu dämpfen,
wobei der Außenring (34) und der Innenring (32) jeweils eine Laufbahn (L) zum Führen der Kugeln (31) aufweisen,
wobei die Laufbahn (L) des Innenrings (32), im Querschnitt gesehen, eine konkave Form mit einer konstanten Krümmung aufweist, deren Radius im wesentlichen dem Radius der Kugeln (31) entspricht,
wobei die Laufbahn (L) des Außenrings (34), ebenfalls im Querschnitt gesehen, in einem zentralen Bereich eine erste Krümmung (35) mit einem ersten Radius (r₀) aufweist und in zumindest einem sich an den zentralen Bereich anschließenden Bereich eine zweite Krümmung (36) mit einem zweiten Radius (r₁) aufweist, **dadurch gekennzeichnet, dass**
der zweite Radius (r₁) um etwa 50% bis etwa 100% größer als der erste Radius (r₀) ist.

2. Dentalhandstück nach Anspruch 1, wobei eine an einen Grenzpunkt (G) zwischen der ersten Krümmung (35) und der zweiten Krümmung (36) an die erste Krümmung (35) angelegte Tangente deckungsgleich ist bzw. die gleiche Steigung aufweist, wie eine am Grenzpunkt (G) an die zweite Krümmung (36) angelegte Tangente.

3. Dentalhandstück nach einem der vorherigen Ansprüche, wobei das elastische Element (40) ein O-Ring ist und/oder der Außenring (34) durch eine Wellfederscheibe (50) axial vorgespannt ist.

4. Dentalhandstück nach einem der vorherigen Ansprüche, wobei sich die erste Krümmung (35) über einen Winkelbereich (δ₀) von etwa 8° bis etwa 15° erstreckt.

5. Dentalhandstück nach einem der vorherigen Ansprüche, wobei zwei Kugellager vorgesehen sind, wobei beide Kugellager als Loslager eingebaut sind.

6. Kugellager für eine schwimmende Einbaulagerung eines Außenrings (34), insbesondere für ein Dentalhandstück, mit:
einem Innenring (32) und einem Außenring (34) sowie einer Vielzahl von dazwischen angeordneten Kugeln (31),
wobei der Außenring (34) und der Innenring (32), jeweils eine Laufbahn (L) zum Führen der Kugeln (31) aufweisen,
wobei die Laufbahn (L) des Innenrings (32), im Querschnitt gesehen, eine konkave Form mit einer konstanten Krümmung aufweist, deren Radius im wesentlichen dem Radius der Kugeln (31) entspricht,
wobei die Laufbahn (L) des Außenrings (34), ebenfalls im Querschnitt gesehen, in einem zentralen Bereich eine erste Krümmung (35) mit einem ersten Radius (r₀) aufweist und in zumindest einem sich an den zentralen Bereich anschließenden Bereich eine zweite Krümmung (36) mit einem zweiten Radius (r₁) aufweist, **dadurch gekennzeichnet, dass**
der zweite Radius (r₁) um etwa 50% bis etwa 100% größer als der erste Radius (r₀) ist.

7. Kugellager nach Anspruch 6, wobei eine an einen Grenzpunkt (G) zwischen der ersten Krümmung (35) und der zweiten Krümmung (36) an die erste Krümmung (35) angelegte Tangente deckungsgleich ist bzw. die gleiche Steigung aufweist, wie eine am Grenzpunkt (G) an die zweite Krümmung (36) angelegte Tangente.

8. Kugellager nach einem oder mehreren der Ansprüche 6 bis 7, wobei sich die erste Krümmung (35) über einen Winkelbereich (δ₀) von etwa 8° bis etwa 15° erstreckt.

9. Verwendung eines Kugellagers (30) als Lager für die drehende Abstützung einer Turbine in einem Dentalhandstück mit einem Innenring (32), dessen Laufbahn (L), im Querschnitt gesehen, eine erste Krümmung (35) mit einem Radius (r₀) aufweist, und einem Außenring (34), dessen Laufbahn (L), ebenfalls im Querschnitt gesehen, in einem zentralen Bereich die erste Krümmung (35) mit dem Radius (r₀) aufweist und in zumindest einem sich an den zentralen Bereich anschließenden Bereich eine zweite Krümmung (36) mit einem zweiten Radius (r₁) aufweist, **dadurch gekennzeichnet, dass** der zweite Radius (r₁) um etwa 50% bis etwa 100% größer als der erste Radius (r₀) ist.

## Claims

1. A dental handpiece for rotationally driving a rotating dental tool (20) comprising:
a housing (10) having a handle (12) and a chuck (14) for receiving the dental tool (20),
a turbine drivable by compressed gas having a turbine wheel (16) and a rotor shaft (18), the rotor shaft (18) being connected to the chuck (14) for rotationally driving the chuck (14);
at least one ball bearing (30) with balls (31), inner ring (32), outer ring (34) and ball bearing cage (33), which rotatably supports the rotor shaft (18),
wherein the inner ring (32) of the ball bearing (30) is arranged on the rotor shaft (18) and the outer ring (34) of the ball bearing (30) is supported in the housing (10) via an elastic element (40) in order to dampen vibrations,
wherein the outer ring (34) and the inner ring (32) each have a raceway (L) for guiding the balls (31),
wherein the raceway (L) of the inner ring (32), seen in cross-section, has a concave shape with a constant curvature, the radius of which substantially corresponds to the radius of the balls (31),
wherein the raceway (L) of the outer ring (34), also seen in cross section, in a central region has a first curvature (35) with a first radius (r₀) and in at least one region adjoining the central region has a second curvature (36) with a second radius (r₁),
**characterized in that** the second radius (r₁) is greater than the first radius (r₀) by about 50% to about 100%.

2. The dental handpiece according to claim 1, wherein a tangent drawn at the first curvature (35) at a boundary point (G) between the first curvature (35) and the second curvature (36) is congruent or has the same slope as a tangent drawn at the second curvature (36) at the boundary point (G).

3. The dental handpiece according to one of the preceding claims, wherein the elastic element (40) is an O-ring and/or the outer ring (34) is axially biased by a corrugated spring washer (50).

4. The dental handpiece according to one of the preceding claims, wherein the first curvature (35) extends over an angular range (δ0) of about 8° to about 15°.

5. The dental handpiece according to one of the preceding claims, wherein two ball bearings are provided, wherein both ball bearings are installed as floating bearings.

6. A ball bearing for a floating installation of an outer ring (34), in particular for a dental handpiece, comprising:
an inner ring (32) and an outer ring (34) and a plurality of balls (31) arranged therebetween,
the outer ring (34) and the inner ring (32) each having a raceway (L) for guiding the balls (31),
wherein the raceway (L) of the inner ring (32), seen in cross-section, has a concave shape with a constant curvature, the radius of which substantially corresponds to the radius of the balls (31),
wherein the raceway (L) of the outer ring (34), also seen in cross section, in a central region has a first curvature (35) with a first radius (r₀) and in at least one region adjoining the central region has a second curvature (36) with a second radius (r₁),
**characterized in that** the second radius (r₁) is greater than the first radius (r₀) by about 50% to about 100%.

7. The ball bearing according to claim 6, wherein a tangent drawn at the first curvature (35) at a boundary point (G) between the first curvature (35) and the second curvature (36) is congruent or has the same slope as a tangent drawn at the second curvature (36) at the boundary point (G).

8. The ball bearing according to one or more of claims 6 to 7, wherein the first curvature (35) extends over an angular range (δ0) of about 8° to about 15°.

9. A use of a ball bearing (30) as a bearing for the rotary support of a turbine in a dental handpiece comprising an inner ring (32), the raceway (L) of which, seen in cross-section, has a first curvature (35) with a radius (r₀), and an outer ring (34), the raceway (L) of which, also seen in cross-section, in a central region has the first curvature (35) with the radius (r₀) and in at least one region adjoining the central region has a second curvature (36) with a second radius (r₁), **characterized in that** the second radius (r₁) is greater than the first radius (r₀) by about 50% to about 100%.

## Revendications

1. Pièce à main dentaire pour entraîner en rotation un outil dentaire (20) tournant, doté :
d'un boîtier (10), qui présente une poignée (12) et un mandrin de serrage (14) destiné à recevoir l'outil dentaire (20),
d'une turbine actionnable au moyen d'un gaz sous pression, qui présente une roue de turbine (16) et un arbre de rotor (18), dans laquelle l'arbre de rotor (18) est relié au mandrin de serrage (14) pour entraîner le mandrin de serrage (14) en rotation,
d'au moins un roulement (30) avec des billes (31), une bague intérieure (32), une bague extérieure (34) et une cage de roulement à billes (33), lequel soutient l'arbre de rotor (18) en rotation,
dans laquelle la bague intérieure (32) du roulement à billes (30) est disposée sur l'arbre de rotor (18) et la bague extérieure (34) du roulement à billes (30) est montée dans le boîtier (10) au-dessus d'un élément élastique (40) pour atténuer les vibrations,
dans laquelle la bague extérieure (34) et la bague intérieure (32) présentent respectivement une piste de roulement (L) servant à guider les billes (31),
dans laquelle la piste de roulement (L) de la bague intérieure (32) présente, vue en coupe transversale, une forme concave ayant une courbure constante, dont le rayon correspond sensiblement au rayon des billes (31),
dans laquelle la piste de roulement (L) de la bague extérieure (34) présente, vue également en coupe transversale, une première courbure (35) d'un premier rayon (r₀) dans une zone centrale et une seconde courbure (36) d'un second rayon (r₁) dans au moins une zone se rattachant à la zone centrale,
**caractérisé en ce que**
le second rayon (r₁) est plus grand d'environ 50% jusqu'à environ 100% que le premier rayon (r₀).

2. Pièce à main dentaire selon la revendication 1, dans laquelle une tangente établie à un point limite (G) entre la première courbure (35) et la seconde courbure (36) sur la première courbure (35) coïncide ou présente la même pente qu'une tangente établie au point limite (G) sur la seconde courbure (36).

3. Pièce à main dentaire selon l'une des revendications précédentes, dans laquelle l'élément élastique (40) est un joint torique et/ou la bague extérieure (34) est pré-serrée axialement par une rondelle élastique ondulée (50).

4. Pièce à main dentaire selon l'une des revendications précédentes, dans laquelle la première courbure (35) s'étend sur une plage angulaire (δ₀) d'environ 8° à environ 15°.

5. Pièce à main dentaire selon l'une des revendications précédentes, dans laquelle deux roulements à billes sont prévus, les deux roulements à billes étant montés sous la forme de paliers libres.

6. Roulement à billes destiné à un montage flottant d'une bague extérieure (34), destiné en particulier à une pièce à main dentaire, doté :
d'une bague intérieure (32) et d'une bague extérieure (34) ainsi que de multiples billes (31) disposées entre l'une et l'autre,
dans lequel la bague extérieure (34) et la bague intérieure (32) présentent respectivement une piste de roulement (L) servant à guider les billes (31),
dans laquelle la piste de roulement (L) de la bague intérieure (32) présente, vue en coupe transversale, une forme concave ayant une courbure constante, dont le rayon correspond sensiblement au rayon des billes (31),
dans laquelle la piste de roulement (L) de la bague extérieure (34) présente, vue également en coupe transversale, une première courbure (35) d'un premier rayon (r₀) dans une zone centrale et une seconde courbure (36) d'un second rayon (r₁) dans au moins une zone se rattachant à la zone centrale,
**caractérisé en ce que**
le second rayon (r₁) est plus grand d'environ 50% jusqu'à environ 100% que le premier rayon (r₀).

7. Roulement à billes selon la revendication 6, dans lequel une tangente établie à un point limite (G) entre la première courbure (35) et la seconde courbure (36) sur la première courbure (35) coïncide ou présente la même pente qu'une tangente établie au point limite (G) sur la seconde courbure (36).

8. Roulement à billes selon l'une ou plusieurs des revendications 6 à 7, dans lequel la première courbure (35) s'étend sur une plage angulaire (δ₀) d'environ 8° à environ 15°.

9. Utilisation d'un roulement à billes (30) sous la forme d'un palier destiné à soutenir une turbine en rotation dans une pièce à main dentaire avec une bague intérieure (32), dont la piste de roulement (L), vue en coupe transversale, présente une première courbure (35) d'un rayon (r₀), et avec une bague extérieure (34), dont la piste de roulement (L), vue également en coupe transversale, présente la première courbure (35) du rayon (r₀) dans une zone centrale et une seconde courbure (36) d'un second rayon (r₁) dans au moins une zone se rattachant à la zone centrale, car
actérisé en ce que
le second rayon (r₁) est plus grand d'environ 50% jusqu'à environ 100% que le premier rayon (r₀).
